# EUROPEAN PATENT SPECIFICATION

(11) **EP 4 585 880 B1**
(45) Date of publication and mention of the grant of the patent: **11.11.2026**
(21) Application number: 24151279.7
(22) Date of filing: 11.01.2024
(51) Int. Cl.: G01B 9/02, G01B 9/0209

(54) **METHOD FOR DETERMINING A HEIGHT MAP USING A WHITE LIGHT INTERFEROMETER AND WHITE LIGHT INTERFEROMETER FOR THE SAME**
VERFAHREN ZUR BESTIMMUNG EINER HÖHENKARTE MIT EINEM WEISSLICHTINTERFEROMETER UND WEISSLICHTINTERFEROMETER DAFÜR
PROCÉDÉ DE DÉTERMINATION D'UNE CARTE DE HAUTEUR À L'AIDE D'UN INTERFÉROMÈTRE À LUMIÈRE BLANCHE ET INTERFÉROMÈTRE À LUMIÈRE BLANCHE POUR CELUI-CI

(43) Date of publication of application: 16.07.2025
(73) Proprietor: Mitutoyo Corporation, Kawasaki, Kanagawa 213-8533 (JP)
(72) Inventor: KUMAR, Nitish, 5508 MP Veldhoven (NL); KUMAR, Neeraj, 5658 EN Eindhoven (NL)
(74) Representative: EP&C

(56) References cited:
- US-A1- 2022 221 272
- WU DONGXU ET AL: "Development of surface reconstruction algorithms for optical interferometric measurement", FRONTIERS OF MECHANICAL ENGINEERING, vol. 16, no. 1, 2 April 2021 (2021-04-02), pages 1 - 31, XP037400378, ISSN: 2095-0233, DOI: 10.1007/S11465-020-0602-6

## Description

The invention relates to a method for determining a height map of a surface of a sample through white light interferometry wherein use is made of a white light interferometer comprising a broad band light source and an optical sensor with multiple pixels. The invention further relates to a white light interferometer comprising a broad band light source, an optical sensor with multiple pixels and a processor configured for performing the method of the invention. The invention further relates to a digital data carrier comprising a computer program which, when run on a processor of a white light interferometer according to the invention, causes the white light interferometer to perform the method according to the invention.

White light interferometry is a standard technique for determining a height map of a surface of a sample. White light interferometry may allow for very hight accuracies of approximately 1nm. An example of a method of white light interferometry for determining a height map may be found in EP2314982 B1, wherein a zero phase crossing method is used. US2022/0221272 relates to an interferometric measurement device and to an interferometric method for determining surface topography of a measurement object. Light intensities of at least one other detector element of a multi-element detector are used besides light intensities of this detector element to determine the value associated with the detector element of the measurement device.

With increasing requirements in measurement precision, for example in the measuring of height maps, a need arises to increase the accuracy of white light interferometry, e.g. when used in determining height maps. A downside in using white light interferometry for determining a height map of a sample is that vibrations of the sample relative to the white light interferometer may cause inaccuracies in the determined height map. White light interferometry relies on determining phase differences of reflected light due to differences in path length of light traveling along light paths in the interferometer. The path lengths may be influenced by vibrations of the sample, which in turn effects the phase differences and thus results in inaccurate height maps.

Vibrations of the sample relative to the white light interferometer may arise due to instabilities of a sample holder. The sample holder may be influenced by various kinds of vibrations from surroundings of the white light interferometer, such as arising from vehicles or people moving. The sample holder may also be influenced by vibrations which may arise from the presence of other instruments, such as typically present in a laboratory or manufacturing environment.

If a sufficient care to eliminate the effect of vibrations on the sample is not taken, an accuracy of a determined height map may be negatively impacted. In some cases, a determined height map may be useless due to the too large errors therein. Vibrations may effect overall accuracy, reliability and repeatability of the results of the white light interferometer.

Known methods of reducing the effect of vibrations on the result of white light interferometry include the use of vibration dampers to isolate the white light interferometer from vibrational effects of the environment. A downside of these known methods is an increase in overall costs. Additionally, the dampers may not sufficiently reduce the effect of the vibrations depending on the type of dampers and type of vibrations.

There exists a need for a method for determining a height map of a sample surface of a sample with a reduced dependency on vibrations.

The aim of the invention is to provide an improved method for determining a height map of a sample surface of a sample with a reduced dependency of vibrations thereon compared to known methods. It is a further aim of the invention to provide an alternative method for determining a height map of a sample surface of a sample with a reduced dependency of vibrations thereon compared to known methods.

The aim of the invention is achieved by the method according to claim 1.

The invention relies on the insight that the use of an algorithm based on a principal component analysis of a stack of interferograms allows for a method of determining a height map that reduces the dependency on random phase shifts in the interferograms used, e.g. such as random phase shifts resulting from vibrations. A method based on the principal component analysis allows to separate the random phase shifts from phase shifts related to the height of the sample. The phase shifts related to the height of the sample are denoted measured phase in this document. As a result, the invention allows for an improved or alternative method of determining a height map compared to known methods for determining a height map using known methods to reduce the effect of vibrations.

The invention relates to a method for determining a height map of a sample surface of a sample through white light interferometry. A height map of a sample surface may be determined to determine a roughness of the sample surface. A height map of a sample surface may further be determined to provide a quality control, e.g. of a production process. White light interferometry is a non-contact optical method for surface height measurements on surfaces with surface profiles.

The method makes use of a white light interferometer comprising a broad band light source and an optical sensor with multiple pixels. The white light interferometer may further comprise a processor for causing the white light interferometer to determine the height map according to a method, e.g. according to the method of the invention. The light source may emit light to a beam splitter which splits the light into a reference light beam and a measurement light beam. The reference light beam may follow a first path towards the optical sensor and the measurement light beam may follow a second path, reflecting on the sample surface, to the optical sensor. Both light beams interfere with each other which results in an interference pattern and allows the interferometer to measure an interferogram associated with the sample surface at a specific position thereof relative to the interferometer. Height differences of the sample surface result in slightly different travel distances for different parts of the measurement light beam, which translate into fringes in the interferogram via resulting relative phase differences. This allows to extract the height of the sample surface by associating the height of the sample surface to the resulting relative phase difference. The interferometer may further comprise a sample holder or sample stage, e.g. which is movable in a direction parallel to the measurement light beam to allow for different measurements position relative to a focal plane of the optical sensor.

The method comprises obtaining a stack of interferograms by vertical scanning of the sample surface through a focal plane of the optical sensor, wherein each interferogram comprises a measured light intensity for each pixel of the optical sensor at a respective height relative to the surface. Thus, each interferogram of the stack is associated with a height of the sample surface relative to the optical sensor and/or the optical plane. To obtain the stack, the sample surface is moved vertically, e.g. by vertical scanning, wherein the vertical direction is understood to be a direction parallel to the measurement light beam at the sample surface. The sample surface may be moved between different measurement positions and at each measurement position an interferogram is determined. The interferogram may be represented by an MxN matrix, e.g. when the optical sensor has MxN pixels, wherein each entry of the MxN matrix comprises an intensity of the associated pixel. The intensity contains information related to the relative phase of the measured light at that pixel for the associated interferogram. Thus by obtaining a stack of Z interferograms, a total of Z MxN matrices may be obtained. For example, the Z MxN matrices may be represented by a single three-dimensional MxNxZ matrix. The three-dimensional MxNxZ matrix representing the stack of interferograms may be reshaped to a two-dimensional M*NxZ matrix *A_{M*N x Z},* wherein each column is associated to an interferogram of the stack of interferograms. It may be shown that the two-dimensional M*NxZ matrix *A_{M*N x Z}* may be written as a sum: ${A}_{M ∗ N x Z} = {a}_{Z} {u}_{M ∗ N} + {b}_{Z} {v}_{M ∗ N}$ wherein *u_{M*N} = B* cos *(φ_{M*N})* and *v_{M*N} = B* sin (*φ_{M*N}),* where *φ_{M*N}* is the measured phase which is be related to the height of the surface at a pixel, B is the modulation amplitude and *a_{Z}* and *b_{Z}* depend on the random phases shifts and not on *φ_{M*N}.*

It may be shown that the two signals *u_{M*N}* and *v_{M*N}* are approximately uncorrelated such that *A_{M*N x Z}* may be decomposed into *u_{M*N}* and *v_{M*N},* thus removing the dependency on the random phase shifts associated to random vibrations of the sample relative to the interferometer.

The signals *u_{M*N}* and *v_{M*N}* may be obtained by performing a principal component analysis on the stack of interferograms, e.g. on the matrix representing the stack of interferograms *A_{M*N x Z}.* To this end, the method further comprises determining a covariance matrix for the stack of interferograms. A covariance matrix may be a square and symmetric matrix which may be obtained by multiplying a matrix with its own transpose. The reshaped two-dimensional matrix *A_{M*N x Z}* may be multiplied with its transpose such that a M*NxM*N covariance matrix of the stack of interferograms is obtained.

In order to determine the principal components of the stack of interferograms, a singular value decomposition is performed on the associated covariance matrix. The singular value decomposition allows to decompose the square matrix into an orthogonal matrix and a diagonal matrix. The principal components of the covariance matrix may then be obtained by calculating a projection of the matrix *A_{M*N x Z}* on the orthogonal matrix of the singular value decomposition, e.g. $Y = Φ {A}_{M ∗ N x Z} .$

Here Y comprises the principal components of *A_{M*N x Z},* i.e. of the stack of interferograms, and *Φ* is the orthogonal matrix of the singular value decomposition.

It may be shown that the principal component associated with the largest eigenvalue and the principal component associated with the second largest eigenvalue correspond to the signals *u_{M*N}* and *v_{M*N}* (which are vectors with each entry thereof associated with a pixel of the optical sensor and which are proportional to the sine and cosine of the measured phase). Thus, by taking ratios of the components of *u_{M*N}* and *v_{M*N},* ratios of sines and cosines may be obtained. As a result, for example taking a tangent of such a ratio may result in obtaining of the measured phase at a respective pixel may.

The method therefore comprises, selecting a first principal component associated with a biggest eigenvalue of the covariance matrix and a second principal component associated with a second biggest eigenvalue of the covariance matrix and taking the ratio of ratio of vector components of the first and second principal components. The measured phase may be determined based on this ratio. The height map is obtained based on the measured phase for each pixel, e.g. based on an average wavelength of the broad band light source.

The invention is further based on the insight that the obtained measured phases for the pixels have an undetermined global sign. This global sign is a result of the singular value decomposition of the covariance matrix and the use of the orthogonal matrix *Φ* in determining the principal components. As may be appreciated, the orthogonal matrix *Φ* appears twice in the singular value decomposition of the covariance matrix and is thus not uniquely determined due to a possible global sign change thereof. As a result, the determined principal components are also not unique determined up to a sign, which results in the unknown global sign of the measured phase. The inventors realised that the correct global sign may be determined by looking at phases of the first and second principal components. The first and second principal components viewed as vectors, always have a phase difference of ±π/2 with the correct global sign for the height map when the first principal component lagging behind the second principal component by π/2. If this is not the case, the global sign has to be reversed, relative to the sign used when determining the Hilbert transformed eigenvectors, to obtain the correct height map.

In order to determine if the global sign of the measured phase is correct the method further comprises performing a Hilbert transform on an eigenvector of the covariance matrix that is associated with the biggest eigenvalue thereof, obtaining a complex Hilbert transformed eigenvector. The real part of the Hilbert transformed eigenvector lags behind the imaginary part of the Hilbert transported eigenvector precisely by a factor π/2.

Thus, by determining a reference phase for a reference pixel of the pixels based on, e.g. by taking by taking an arctangent of, a ratio of vector components of the real part and imaginary part of the Hilbert transformed eigenvector, wherein the respective vector components are associated with the reference pixel and determining if the measured phase of the reference pixel corresponds to the reference phase of the reference pixel, it may be checked if the global sign of the measured phase is correct by checking if the measured phase of the reference pixel corresponds to the reference phase and reversing the global sign of the height map, e.g. of the measured phases, if the measured phase does not correspond to the reference phase. Thus, this allows to determine a height map of the sample surface with a correct global sign.

In embodiments, the determining if the measured phase of the reference pixel corresponds to the reference phase of the reference pixel comprises:
- calculating a magnitude of a sum of the measured phase and the reference phase of the reference pixel and calculating a magnitude of a difference between the measured phase and the reference phase of the reference pixel; and
- determining that the measured phase of the reference pixel corresponds to the reference phase if the magnitude of the difference is smaller than the magnitude of the sum and determining that the measured phase of the reference pixel does not correspond to the reference phase if the magnitude of the difference is larger than the magnitude of the sum.

This provides explicit steps to determine whether or not the measured phase of the reference pixel corresponds to the reference phase of the reference pixel.

The aim of the invention is also achieved by the method of claim 3, which obtains the measured phases in the same way as the method of claim 1, but differs in determining the correct global sign. The method according to claim 3 comprises:
- taking a Fourier transform of a first eigenvector of the covariance matrix which is associated with the biggest eigenvalue and taking a Fourier transform of a second eigenvector of the covariance matrix which is associated with the second biggest eigenvalue;
- determining a highest magnitude frequency of the Fourier transformed first eigenvector;
- calculating a first Fourier phase of the Fourier transformed first eigenvector and a second Fourier phase of the Fourier transformed second eigenvector associated with the determined highest magnitude frequency;
- determining a difference between the first Fourier phase and the second Fourier phase by subtracting the second Fourier phase from the first Fourier phase; and
- if the difference between the First Fourier phase and the second Fourier phase is between 0 and π modulo 2π, reversing a global sign of the determined height map.

Thus, accordingly the phase difference between the first and second principal components is checked by looking at a phase difference of the associated Fourier transformed vectors. The global sign of the height map is revered, relative to the sign used to check the difference between the Fourier phases, if the difference therebetween is between 0 and π modulo 2π.

In embodiments, the ratio of vector components of the first and second principal components is proportional to the vector component of the second principal component divided by the vector component of the first principal component. This may allow to use the arctangent to determine the measured phase.

In embodiments, determining the covariance matrix comprises removing an average intensity of the stack of interferograms. The average intensity may be determined by determining a mean of the intensity of the stack of interferograms. The so determined average intensity may be removed from each entry of the matrix representation of the stack of interferograms.

In embodiments, determining the covariance matrix comprises reshaping a three-dimensional M x N x Z matrix representative of the stack of interferograms to a two-dimensional M*N x Z matrix, wherein the optical sensor has M x N pixels and the stack comprises Z interferograms.

In embodiments determining the height map based on the determined measured phase for each pixel comprises multiplying the determined measured phase with a central wavelength of the broad band light source.

The invention further relates to a white light interferometer comprising a broad band light source, an optical sensor comprising pixels and a processor for obtaining a height map of a surface of a sample, wherein the white light interferometer, e.g. the processor thereof, is configured for performing the method according to the invention.

In embodiments, the white light interferometer is configured for:
- obtaining a stack of interferograms by vertical scanning of the surface through a focal plane of the optical sensor, wherein each interferogram comprises a measured light intensity for each pixel of the optical sensor at a respective height relative to the surface,

and wherein the processer is configured for:
   - determining a covariance matrix for the stack of interferograms;
   - determining principal components of the stack of interferograms by performing a singular value decomposition of the covariance matrix;
   - selecting a first principal component associated with a biggest eigenvalue of the covariance matrix and a second principal component associated with a second biggest eigenvalue of the covariance matrix;
   - determining a measured phase, for each pixel of the pixels, by taking an arctangent of a ratio of vector components of the first and second principal components, wherein the vector components are associated with the respective pixel; and
   - determining the height map based on the determined measured phase for each pixel,
wherein the processor is further configured for:
   - performing a Hilbert transform on an eigenvector of the covariance matrix associated with the biggest eigenvalue thereof obtaining a complex Hilbert transformed eigenvector;
   - determining a reference phase for a reference pixel of the pixels by taking an arctangent of a ratio of vector components of the real part and imaginary part of the Hilbert transformed eigenvector, wherein the vector components are associated with the reference pixel;
   - determining if the measured phase of the reference pixel corresponds to the reference phase; and
   - if the measured phase of the reference pixel does not correspond to the reference phase, reversing a global sign of the determined height map.

In embodiments of the white light interferometer, the processor is configured for:
- calculating a magnitude of a sum of the measured phase of the reference pixel and the reference phase and calculating a magnitude of a difference between the measured phase of the reference pixel and the reference phase; and
- determining that the measured phase of the reference pixel corresponds to the reference phase if the magnitude of the difference is smaller than the magnitude of the sum and determining that the measured phase of the reference pixel does not correspond to the reference phase if the magnitude of the difference is larger than the magnitude of the sum.

In embodiments, the white light interferometer is configured for:
- obtaining a stack of interferograms by vertical scanning of the surface through a focal plane of the optical sensor, wherein each interferogram comprises a measured light intensity for each pixel of the optical sensor at a respective height relative to the surface,

and wherein the processer is configured for:
   - determining a covariance matrix for the stack of interferograms;
   - determining principal components of the stack of interferograms by performing a singular value decomposition of the covariance matrix;
   - selecting a first principal component associated with a biggest eigenvalue of the covariance matrix and a second principal component associated with a second biggest eigenvalue of the covariance matrix;
   - determining a measured phase, for each pixel of the pixels, by taking an arctangent of a ratio of vector components of the first and second principal components, wherein the vector components are associated with the respective pixel; and
   - determining the height map based on the determined measured phase for each pixel,
wherein the processor is further configured for:
   - taking a Fourier transform of a first eigenvector of the covariance matrix which is associated with the biggest eigenvalue and taking a Fourier transform of a second eigenvector of the covariance matrix which is associated with the second biggest eigenvalue;
   - determining a highest magnitude frequency of the Fourier transformed first eigenvector;
   - calculating a first Fourier phase of the Fourier transformed first eigenvector and a second Fourier phase of the Fourier transformed second eigenvector associated with the determined highest magnitude frequency;
   - determining a difference between the first Fourier phase and the second Fourier phase by subtracting the second Fourier phase from the first Fourier phase; and
   - if the difference between the First Fourier phase and the second Fourier phase is between 0 and π modulo 2π , reversing a global sign of the determined height map.

The invention further relates to a digital data carrier comprising a computer program which, when run on a processor of a white light interferometer according to the invention, causes the white light interferometer to perform the method according to the invention.

Embodiments of the invention will now be described, by way of example, with reference to the accompanying drawing in which corresponding reference symbols indicate corresponding parts, and in which:
- Fig. 1 depicts a white light interferometer for determining a height map; and
- Fig. 2 depicts a flow chart of a method for determining a height map.

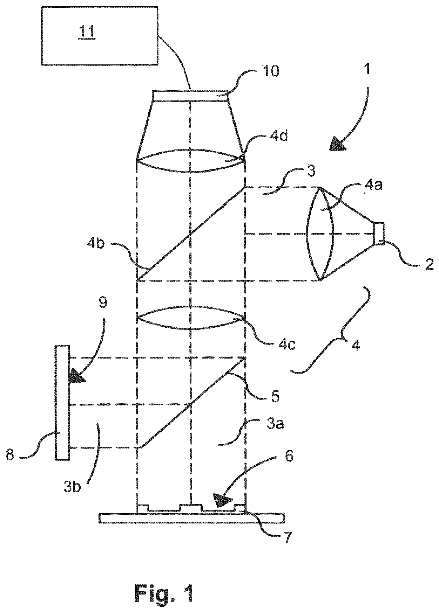

Figure 1 depicts an example of a white light interferometer 1 for determining a height map. The interferometer comprises a broadband light source 2. Light 3 from the light source 2 may pass through a lens 4a, a beamsplitter 4b, and a second lens 4c. After passing through the second lens 4c, the light 3 is split by a beamsplitter 5 into a first partial light beam 4a and a second partial light beam 3b. The first partial light beam 3a is directed to a surface 6 of a sample 7. The second partial light beam 3b is directed to a reference mirror 8 with a reference surface 9. After reflection by the mirrors 6 an d8, the partial light beams 3a, 3b are combined and propagate to the optical sensor 10 with multiple pixels. For example, the optical sensor 10 may be an CCD array camera 10. This setup results in an interference signal on the optical sensor 10.

The pixels of the optical sensor 10 may correspond to a spatial position on the sample surface 6 and on the reference surface 9. After vertical scanning, each pixel may have an associated intensity signal which maybe associated to a height at a corresponding spatial position of the sample 7.

The sample 7 may be moved through an focal plane of the second lens 4c and for multiple positions of the sample 7 relative to the interferometer 1 an interferogram is captured by the optical sensor 10. In this way, a stack of interferograms may be obtained 101 by the interferometer 1, which stack of interferograms may be received by the processor 11 to allow the processor to determine the height map based on the method of the invention.

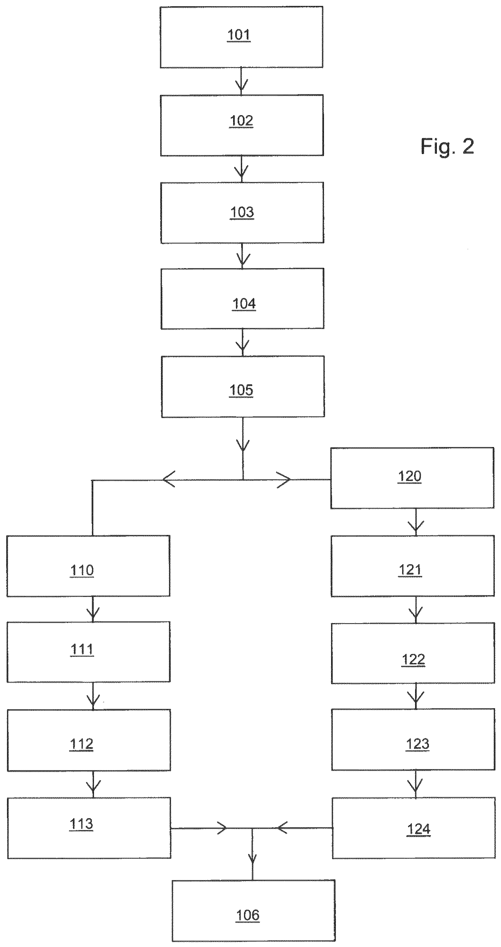

Figure 2 depicts a flow chart of a method for determining a height map, wherein the method comprises:
- obtaining 101 a stack of interferograms by vertical scanning of the surface 6 through a focal plane of the optical sensor 10, wherein each interferogram comprises a measured light intensity for each pixel of the optical sensor 10 at a respective height of the surface 6 relative to the focal plane;
- determining 102 a covariance matrix for the stack of interferograms;
- determining 103 principal components of the stack of interferograms by performing a singular value decomposition of the covariance matrix;
- selecting 104 a first principal component associated with a biggest eigenvalue of the covariance matrix and a second principal component associated with a second biggest eigenvalue of the covariance matrix; and
- determining 105 a measured phase, for each pixel of the pixels, based on, e.g. by taking an arctangent of, a ratio of vector components of the first and second principal components, wherein the respective vector components are associated with the respective pixel.

As explained in the description above, and as may be seen in figure 2, the invention allows to determine the correct global sign in front of the measured phase based on two methods, both based on the insight that the correct sign is obtained when the first principal component lags behind the second principal component by π/2. The determining 106 the height map based on the measured phase for each pixel thus comprises either:
- performing 110 a Hilbert transform on an eigenvector of the covariance matrix associated with the biggest eigenvalue thereof obtaining a complex Hilbert transformed eigenvector;
- determining 111 a reference phase for a reference pixel of the pixels based on, e.g. by taking by taking an arctangent of, a ratio of vector components of the real part and imaginary part of the Hilbert transformed eigenvector, wherein the respective vector components are associated with the reference pixel;
- determining 112 if the measured phase of the reference pixel corresponds to the reference phase of the reference pixel; and
- if the measured phase of the reference pixel does not correspond to the reference phase, reversing 113 a global sign of the measured phase, e.g. the height map.

Or the determining 106 the height map based on the measured phase for each pixel comprises:
- taking 120 a Fourier transform of a first eigenvector of the covariance matrix which is associated with the biggest eigenvalue and taking a Fourier transform of a second eigenvector of the covariance matrix which is associated with the second biggest eigenvalue;
- determining 121 a highest magnitude frequency of the Fourier transformed first eigenvector;
- calculating 122 a first Fourier phase of the Fourier transformed first eigenvector and a second Fourier phase of the Fourier transformed second eigenvector associated with the determined highest magnitude frequency;
- determining 123 a difference between the first Fourier phase and the second Fourier phase by subtracting the second Fourier phase from the first Fourier phase; and
- if the difference between the First Fourier phase and the second Fourier phase is between 0 and π modulo 2π, reversing 124 a global sign of the measured phase, e.g. the height map.

## Claims

1. Method for determining a height map of a sample surface (6) of a sample (7) through white light interferometry wherein use is made of a white light interferometer (1) comprising a broad band light source (2) and an optical sensor (10) with multiple pixels, wherein the method comprises:
- obtaining (101) a stack of interferograms by vertical scanning of the surface (6) through a focal plane of the optical sensor (10), wherein each interferogram comprises a measured light intensity for each pixel of the optical sensor (10) at a respective height of the surface (6) relative to the focal plane;
- determining (102) a covariance matrix for the stack of interferograms;
- determining (103) principal components of the stack of interferograms by performing a singular value decomposition of the covariance matrix;
- selecting (104) a first principal component associated with a biggest eigenvalue of the covariance matrix and a second principal component associated with a second biggest eigenvalue of the covariance matrix;
- determining (105) a measured phase, for each pixel of the pixels, based on, e.g. by taking an arctangent of, a ratio of vector components of the first and second principal components, wherein the respective vector components are associated with the respective pixel; and
- determining (106) the height map based on the measured phase for each pixel,
**characterized in that** the determining (106) the height map comprises:
- performing (110) a Hilbert transform on an eigenvector of the covariance matrix associated with the biggest eigenvalue thereof obtaining a complex Hilbert transformed eigenvector;
- determining (111) a reference phase for a reference pixel of the pixels based on, e.g. by taking by taking an arctangent of, a ratio of vector components of the real part and imaginary part of the Hilbert transformed eigenvector, wherein the respective vector components are associated with the reference pixel;
- determining (112) if the measured phase of the reference pixel corresponds to the reference phase of the reference pixel; and
- if the measured phase of the reference pixel does not correspond to the reference phase, reversing (113) a global sign of the measured phase, e.g. the height map.

2. Method according to claim 1, wherein the determining (112) if the measured phase of the reference pixel corresponds to the reference phase of the reference pixel comprises:
- calculating a magnitude of a sum of the measured phase and the reference phase of the reference pixel and calculating a magnitude of a difference between the measured phase and the reference phase of the reference pixel; and
- determining that the measured phase of the reference pixel corresponds to the reference phase if the magnitude of the difference is smaller than the magnitude of the sum and determining that the measured phase of the reference pixel does not correspond to the reference phase if the magnitude of the difference is larger than the magnitude of the sum.

3. Method for determining a height map of a surface (6) of a sample (7) through white light interferometry wherein use is made of a white light interferometer (1) comprising a broad band light source (2) and an optical sensor (10) with multiple pixels, wherein the method comprises:
- obtaining (101) a stack of interferograms by vertical scanning of the surface (6) through a focal plane of the optical sensor (10), wherein each interferogram comprises a measured light intensity for each pixel of the optical sensor (10) at a respective height relative to the surface (6);
- determining (102) a covariance matrix for the stack of interferograms;
- determining (103) principal components of the stack of interferograms by performing a singular value decomposition of the covariance matrix;
- selecting (104) a first principal component associated with a biggest eigenvalue of the covariance matrix and a second principal component associated with a second biggest eigenvalue of the covariance matrix;
- determining (105) a measured phase, for each pixel of the pixels, based on, e.g. by taking by taking an arctangent of, a ratio of vector components of the first and second principal components, wherein the respective vector components are associated with the respective pixel; and
- determining (106) the height map based on the determined measured phase for each pixel,
**characterized in that** the determining (106) the height map comprises:
- taking (120) a Fourier transform of a first eigenvector of the covariance matrix which is associated with the biggest eigenvalue and taking a Fourier transform of a second eigenvector of the covariance matrix which is associated with the second biggest eigenvalue;
- determining (121) a highest magnitude frequency of the Fourier transformed first eigenvector;
- calculating (122) a first Fourier phase of the Fourier transformed first eigenvector and a second Fourier phase of the Fourier transformed second eigenvector associated with the determined highest magnitude frequency;
- determining (123) a difference between the first Fourier phase and the second Fourier phase by subtracting the second Fourier phase from the first Fourier phase; and
- if the difference between the First Fourier phase and the second Fourier phase is between 0 and π modulo 2π, reversing (124) a global sign of the measured phase, e.g. the height map.

4. Method according to one or more of the preceding claims, wherein the ratio of vector components of the first and second principal components is proportional to vector component of the second principal component divided by the vector component of the first principal component.

5. Method according to one or more of the preceding claims, wherein determining the covariance matrix comprises removing an average intensity of the stack of interferograms.

6. Method according to one or more of the preceding claims, wherein determining the covariance matrix comprises reshaping a three-dimensional M x N x Z matrix representative of the stack of interferograms to a two-dimensional M*N x Z matrix, wherein the optical sensor has M x N pixels and the stack comprises Z interferograms.

7. Method according to one or more of the preceding claims, wherein determining (106) the height map based on the determined measured phase for each pixel comprises multiplying the determined measured phase with a central wavelength of the broad band light source (2).

8. White light interferometer (1) comprising a broad band light source (2), an optical sensor (10) comprising pixels and a processor (11) for obtaining a height map of a surface (6) of a sample (7), wherein the white light interferometer (1), e.g. the processor (11) thereof, is configured for performing the method according to one or more of the preceding claims.

9. White light interferometer (1) according to claim 8, wherein the processor (11) is configured for:
- calculating a magnitude of a sum of the measured phase of the reference pixel and the reference phase and calculating a magnitude of a difference between the measured phase of the reference pixel and the reference phase; and
- determining that the measured phase of the reference pixel corresponds to the reference phase if the magnitude of the difference is smaller than the magnitude of the sum and determining that the measured phase of the reference pixel does not correspond to the reference phase if the magnitude of the difference is larger than the magnitude of the sum.

10. Digital data carrier comprising a computer program which, when run on a processor (11) of a white light interferometer (1) according to one or more of the claims 8 - 9, causes the white light interferometer (1) to perform the method according to one or more of the claims 1 - 7.

## Patentansprüche

1. Verfahren zum Bestimmen einer Höhenkarte einer Probenoberfläche (6) einer Probe (7) durch Weißlichtinterferometrie, wobei ein Weißlichtinterferometer (1) verwendet wird, das eine Breitbandlichtquelle (2) und einen optischen Sensor (10) mit mehreren Pixeln umfasst, wobei das Verfahren Folgendes umfasst:
- Erhalten (101) eines Stapels von Interferogrammen durch vertikales Scannen der Oberfläche (6) durch eine Brennebene des optischen Sensors (10), wobei jedes Interferogramm eine gemessene Lichtintensität für jedes Pixel des optischen Sensors (10) in einer jeweiligen Höhe der Oberfläche (6) relativ zu der Brennebene umfasst;
- Bestimmen (102) einer Kovarianzmatrix für den Stapel von Interferogrammen;
- Bestimmen (103) von Hauptkomponenten des Stapels von Interferogrammen durch Durchführen einer Singulärwertzerlegung der Kovarianzmatrix;
- Auswählen (104) einer ersten Hauptkomponente, die mit einem größten Eigenwert der Kovarianzmatrix assoziiert ist, und einer zweiten Hauptkomponente, die mit einem zweitgrößten Eigenwert der Kovarianzmatrix assoziiert ist;
- Bestimmen (105) einer gemessenen Phase für jedes Pixel der Pixel basierend auf einem Verhältnis von Vektorkomponenten der ersten und zweiten Hauptkomponente, z. B. durch Nehmen eines Arcustangens, wobei die jeweiligen Vektorkomponenten mit dem jeweiligen Pixel assoziiert sind; und
- Bestimmen (106) der Höhenkarte basierend auf der gemessenen Phase für jedes Pixel,
**dadurch gekennzeichnet, dass** das Bestimmen (106) der Höhenkarte umfasst:
- Durchführen (110) einer Hilbert-Transformation an einem Eigenvektor der Kovarianzmatrix, die mit dem größten Eigenwert davon assoziiert ist, wodurch ein komplexer Hilbert-transformierter Eigenvektor erhalten wird;
- Bestimmen (111) einer Referenzphase für ein Referenzpixel der Pixel basierend auf einem Verhältnis von Vektorkomponenten des Realteils und des Imaginärteils des Hilbert-transformierten Eigenvektors, z. B. durch Nehmen eines Arcustangens davon, wobei die jeweiligen Vektorkomponenten mit dem Referenzpixel assoziiert sind;
- Bestimmen (112), ob die gemessene Phase des Referenzpixels der Referenzphase des Referenzpixels entspricht; und
- wenn die gemessene Phase des Referenzpixels nicht der Referenzphase entspricht, Umkehren (113) eines globalen Vorzeichens der gemessenen Phase, z. B. der Höhenkarte.

2. Verfahren nach Anspruch 1, wobei das Bestimmen (112), ob die gemessene Phase des Referenzpixels der Referenzphase des Referenzpixels entspricht, umfasst:
- Berechnen eines Betrags einer Summe der gemessenen Phase und der Referenzphase des Referenzpixels, und Berechnen eines Betrags einer Differenz zwischen der gemessenen Phase und der Referenzphase des Referenzpixels; und
- Bestimmen, dass die gemessene Phase des Referenzpixels der Referenzphase entspricht, wenn der Betrag der Differenz kleiner als der Betrag der Summe ist, und Bestimmen, dass die gemessene Phase des Referenzpixels nicht der Referenzphase entspricht, wenn der Betrag der Differenz größer als der Betrag der Summe ist.

3. Verfahren zum Bestimmen einer Höhenkarte einer Oberfläche (6) einer Probe (7) durch Weißlichtinterferometrie, wobei ein Weißlichtinterferometer (1) verwendet wird, das eine Breitbandlichtquelle (2) und einen optischen Sensor (10) mit mehreren Pixeln umfasst, wobei das Verfahren Folgendes umfasst:
- Erhalten (101) eines Stapels von Interferogrammen durch vertikales Scannen der Oberfläche (6) durch eine Brennebene des optischen Sensors (10), wobei jedes Interferogramm eine gemessene Lichtintensität für jedes Pixel des optischen Sensors (10) in einer jeweiligen Höhe relativ zu der Oberfläche (6) umfasst;
- Bestimmen (102) einer Kovarianzmatrix für den Stapel von Interferogrammen;
- Bestimmen (103) von Hauptkomponenten des Stapels von Interferogrammen durch Durchführen einer Singulärwertzerlegung der Kovarianzmatrix;
- Auswählen (104) einer ersten Hauptkomponente, die mit einem größten Eigenwert der Kovarianzmatrix assoziiert ist, und einer zweiten Hauptkomponente, die mit einem zweitgrößten Eigenwert der Kovarianzmatrix assoziiert ist;
- Bestimmen (105) einer gemessenen Phase für jedes Pixel der Pixel basierend auf einem Verhältnis von Vektorkomponenten der ersten und zweiten Hauptkomponente, z. B. durch Nehmen eines Arcustangens, wobei die jeweiligen Vektorkomponenten mit dem jeweiligen Pixel assoziiert sind; und
- Bestimmen (106) der Höhenkarte basierend auf der bestimmten gemessenen Phase für jedes Pixel,
**dadurch gekennzeichnet, dass** das Bestimmen (106) der Höhenkarte umfasst:
- Nehmen (120) einer Fourier-Transformation eines ersten Eigenvektors der Kovarianzmatrix, der mit dem größten Eigenwert assoziiert ist, und Nehmen einer Fourier-Transformation eines zweiten Eigenvektors der Kovarianzmatrix, der mit dem zweitgrößten Eigenwert assoziiert ist;
- Bestimmen (121) einer Frequenz des höchsten Betrags des Fourier-transformierten ersten Eigenvektors;
- Berechnen (122) einer ersten Fourier-Phase des Fourier-transformierten ersten Eigenvektors und einer zweiten Fourier-Phase des Fourier-transformierten zweiten Eigenvektors, die mit der bestimmten Frequenz mit dem höchsten Betrag assoziiert sind;
- Bestimmen (123) einer Differenz zwischen der ersten Fourier-Phase und der zweiten Fourier-Phase durch Subtrahieren der zweiten Fourier-Phase von der ersten Fourier-Phase; und
- wenn die Differenz zwischen der ersten Fourier-Phase und der zweiten Fourier-Phase zwischen 0 und π modulo 2π liegt, Umkehren (124) eines globalen Vorzeichens der gemessenen Phase, z. B. der Höhenkarte.

4. Verfahren nach einem oder mehreren der vorhergehenden Ansprüche, wobei das Verhältnis von Vektorkomponenten der ersten und zweiten Hauptkomponente proportional zu Vektorkomponente der zweiten Hauptkomponente, geteilt durch die Vektorkomponente der ersten Hauptkomponente, ist.

5. Verfahren nach einem oder mehreren der vorhergehenden Ansprüche, wobei Bestimmen der Kovarianzmatrix Entfernen einer durchschnittlichen Intensität des Stapels von Interferogrammen umfasst.

6. Verfahren nach einem oder mehreren der vorhergehenden Ansprüche, wobei Bestimmen der Kovarianzmatrix Umformen einer dreidimensionalen M x N x Z-Matrix, die den Stapel von Interferogrammen repräsentiert, zu einer zweidimensionalen M*N x Z-Matrix umfasst, wobei der optische Sensor M x N Pixel aufweist und der Stapel Z Interferogramme umfasst.

7. Verfahren nach einem oder mehreren der vorhergehenden Ansprüche, wobei Bestimmen (106) der Höhenkarte basierend auf der bestimmten gemessenen Phase für jedes Pixel Multiplizieren der bestimmten gemessenen Phase mit einer zentralen Wellenlänge der Breitbandlichtquelle (2) umfasst.

8. Weißlichtinterferometer (1), das eine Breitbandlichtquelle (2), einen optischen Sensor (10), der Pixel umfasst, und einen Prozessor (11) umfasst, zum Erhalten einer Höhenkarte einer Oberfläche (6) einer Probe (7), wobei das Weißlichtinterferometer (1), z. B. der Prozessor (11) davon, zum Durchführen des Verfahrens nach einem oder mehreren der vorhergehenden Ansprüche konfiguriert ist.

9. Weißlichtinterferometer (1) nach Anspruch 8, wobei der Prozessor (11) konfiguriert ist zum:
- Berechnen eines Betrags einer Summe der gemessenen Phase des Referenzpixels und der Referenzphase, und Berechnen eines Betrags einer Differenz zwischen der gemessenen Phase des Referenzpixels und der Referenzphase; und
- Bestimmen, dass die gemessene Phase des Referenzpixels der Referenzphase entspricht, wenn der Betrag der Differenz kleiner als der Betrag der Summe ist, und Bestimmen, dass die gemessene Phase des Referenzpixels nicht der Referenzphase entspricht, wenn der Betrag der Differenz größer als der Betrag der Summe ist.

10. Digitaler Datenträger, der ein Computerprogramm umfasst, das, wenn es auf einem Prozessor (11) eines Weißlichtinterferometers (1) nach einem oder mehreren der Ansprüche 8 - 9 läuft, bewirkt, dass das Weißlichtinterferometer (1) das Verfahren nach einem oder mehreren der Ansprüche 1 - 7 durchführt.

## Revendications

1. Procédé destiné à déterminer une carte de hauteur d'une surface d'échantillon (6) d'un échantillon (7) par interférométrie en lumière blanche dans lequel il est fait usage d'un interféromètre à lumière blanche (1) comprenant une source de lumière à large bande (2) et un capteur optique (10) doté de multiples pixels, le procédé comprenant :
- l'obtention (101) d'un empilement d'interférogrammes par balayage vertical de la surface (6) à travers un plan focal du capteur optique (10), chaque interférogramme comprenant une intensité lumineuse mesurée pour chaque pixel du capteur optique (10) à une hauteur respective de la surface (6) par rapport au plan focal ;
- la détermination (102) d'une matrice de covariance pour l'empilement d'interférogrammes ;
- la détermination (103) de composantes principales de l'empilement d'interférogrammes par réalisation d'une décomposition en valeurs singulières de la matrice de covariance ;
- la sélection (104) d'une première composante principale associée à une valeur propre la plus grande de la matrice de covariance et d'une deuxième composante principale associée à une deuxième valeur propre la plus grande de la matrice de covariance ;
- la détermination (105) d'une phase mesurée, pour chaque pixel parmi les pixels, par ex. sur la base de la prise d'une arctangente d'un rapport de composantes vectorielles des première et deuxième composantes principales, les composantes vectorielles respectives étant associées au pixel respectif ; et
- la détermination (106) de la carte de hauteur sur la base de la phase mesurée pour chaque pixel,
**caractérisé en ce que** la détermination (106) de la carte de hauteur comprend :
- la réalisation (110) d'une transformée de Hilbert sur un vecteur propre de la matrice de covariance associé à la plus grande valeur propre de celle-ci pour obtenir un vecteur propre transformé de Hilbert complexe ;
- la détermination (111) d'une phase de référence pour un pixel de référence parmi les pixels, par ex. sur la base de la prise d'une arctangente d'un rapport de composantes vectorielles de la partie réelle et de la partie imaginaire du vecteur propre transformé de Hilbert, les composantes vectorielles respectives étant associées au pixel de référence ;
- la détermination (112) que la phase mesurée du pixel de référence correspond ou non à la phase de référence du pixel de référence ; et
- si la phase mesurée du pixel de référence ne correspond pas à la phase de référence, l'inversion (113) d'un signe global de la phase mesurée, par ex. de la carte de hauteur.

2. Procédé selon la revendication 1, dans lequel la détermination (112) que la phase mesurée du pixel de référence correspond ou non à la phase de référence du pixel de référence comprend :
- le calcul d'une amplitude d'une somme de la phase mesurée et de la phase de référence du pixel de référence et le calcul d'une amplitude d'une différence entre la phase mesurée et la phase de référence du pixel de référence ; et
- la détermination que la phase mesurée du pixel de référence correspond à la phase de référence si l'amplitude de la différence est inférieure à l'amplitude de la somme et la détermination que la phase mesurée du pixel de référence ne correspond pas à la phase de référence si l'amplitude de la différence est supérieure à l'amplitude de la somme.

3. Procédé destiné à déterminer une carte de hauteur d'une surface (6) d'un échantillon (7) par interférométrie en lumière blanche dans lequel il est fait usage d'un interféromètre à lumière blanche (1) comprenant une source de lumière à large bande (2) et un capteur optique (10) doté de multiples pixels, le procédé comprenant :
- l'obtention (101) d'un empilement d'interférogrammes par balayage vertical de la surface (6) à travers un plan focal du capteur optique (10), chaque interférogramme comprenant une intensité lumineuse mesurée pour chaque pixel du capteur optique (10) à une hauteur respective par rapport à la surface (6) ;
- la détermination (102) d'une matrice de covariance pour l'empilement d'interférogrammes ;
- la détermination (103) de composantes principales de l'empilement d'interférogrammes par réalisation d'une décomposition en valeurs singulières de la matrice de covariance ;
- la sélection (104) d'une première composante principale associée à une valeur propre la plus grande de la matrice de covariance et d'une deuxième composante principale associée à une deuxième valeur propre la plus grande de la matrice de covariance ;
- la détermination (105) d'une phase mesurée, pour chaque pixel parmi les pixels, par ex. sur la base de la prise d'une arctangente d'un rapport de composantes vectorielles des première et deuxième composantes principales, les composantes vectorielles respectives étant associées au pixel respectif ; et
- la détermination (106) de la carte de hauteur sur la base de la phase mesurée déterminée pour chaque pixel,
**caractérisé en ce que** la détermination (106) de la carte de hauteur comprend :
- la prise (120) d'une transformée de Fourier d'un premier vecteur propre de la matrice de covariance qui est associé à la plus grande valeur propre et la prise d'une transformée de Fourier d'un deuxième vecteur propre de la matrice de covariance qui est associé à la deuxième plus grande valeur propre ;
- la détermination (121) d'une fréquence de la plus grande amplitude du premier vecteur propre transformé de Fourier ;
- le calcul (122) d'une première phase de Fourier du premier vecteur propre transformé de Fourier et d'une deuxième phase de Fourier du deuxième vecteur propre transformé de Fourier associés à la fréquence de la plus grande amplitude déterminée ;
- la détermination (123) d'une différence entre la première phase de Fourier et la deuxième phase de Fourier par soustraction de la deuxième phase de Fourier de la première phase de Fourier ; et
- si la différence entre la première phase de Fourier et la deuxième phase de Fourier est comprise entre 0 et π modulo 2π, l'inversion (124) d'un signe global de la phase mesurée, par ex. de la carte de hauteur.

4. Procédé selon une ou plusieurs des revendications précédentes, dans lequel le rapport de composantes vectorielles des première et deuxième composantes principales est proportionnel à la composante vectorielle de la deuxième composante principale divisée par la composante vectorielle de la première composante principale.

5. Procédé selon une ou plusieurs des revendications précédentes, dans lequel la détermination de la matrice de covariance comprend le retrait d'une intensité moyenne de l'empilement d'interférogrammes.

6. Procédé selon une ou plusieurs des revendications précédentes, dans lequel la détermination de la matrice de covariance comprend la réorganisation d'une matrice tridimensionnelle M x N x Zreprésentative de l'empilement d'interférogrammes en une matrice bidimensionnelle M*N x Z, le capteur optique ayant M x N pixels et l'empilement comprenant Z interférogrammes.

7. Procédé selon une ou plusieurs des revendications précédentes, dans lequel la détermination (106) de la carte de hauteur sur la base de la phase mesurée déterminée pour chaque pixel comprend la multiplication de la phase mesurée déterminée par une longueur d'onde centrale de la source de lumière à large bande (2).

8. Interféromètre à lumière blanche (1) comprenant une source de lumière à large bande (2), un capteur optique (10) comprenant des pixels et un processeur (11) destiné à obtenir une carte de hauteur d'une surface (6) d'un échantillon (7), l'interféromètre à lumière blanche (1), par ex. son processeur (11), étant conçu pour effectuer le procédé selon une ou plusieurs des revendications précédentes.

9. Interféromètre à lumière blanche (1) selon la revendication 8, dans lequel le processeur (11) est conçu pour :
- calculer une amplitude d'une somme de la phase mesurée du pixel de référence et de la phase de référence et calculer une amplitude d'une différence entre la phase mesurée du pixel de référence et la phase de référence ; et
- la détermination que la phase mesurée du pixel de référence correspond à la phase de référence si l'amplitude de la différence est inférieure à l'amplitude de la somme et la détermination que la phase mesurée du pixel de référence ne correspond pas à la phase de référence si l'amplitude de la différence est supérieure à l'amplitude de la somme.

10. Support de données numériques comprenant un programme informatique qui, lors de son exécution sur un processeur (11) d'un interféromètre à lumière blanche (1) selon une ou plusieurs des revendications 8 et 9, amène l'interféromètre à lumière blanche (1) à effectuer le procédé selon une ou plusieurs des revendications 1 à 7.
